# FASCICULE DE BREVET EUROPEEN

(11) **EP 1 708 125 B1**
(45) Date de publication et mention de la délivrance du brevet: **11.03.2009**
(21) Numéro de dépôt: 06290481.8
(22) Date de dépôt: 24.03.2006
(51) Int. Cl.: G06K 9/32, G06T 7/20, B60Q 1/08

(54) **Procédé de détection anticipée d'une arrivée d'un véhicule automobile dans un secteur sombre**
Verfahren zur vorzeitigen Erfassung der Ankunft eines Kraftfahrzeugs in einem dunklen Sektor
Procedure for early detection of the arrival of an automobile in a dark area

(30) Priorité: 31.03.2005 FR 0503168
(43) Date de publication de la demande: 04.10.2006
(73) Titulaire: VALEO VISION, 93012 Bobigny Cedex (FR)
(72) Inventeur: Leleve, Joël, 93800 Epinay sue Seine (FR); Rebut, Julien, 75010 Paris (FR); Bensrhair, Abdelaziz, 76131 Mont Saint Aignan Cedex (FR)

(56) Documents cités:
- EP-A- 1 019 267
- DE-A1- 19 704 818
- PATENT ABSTRACTS OF JAPAN vol. 010, no. 109 (M-472), 23 avril 1986 (1986-04-23) -& JP 60 240545 A (NIPPON DENSO KK), 29 novembre 1985 (1985-11-29)
- CUCCHIARA R ET AL: "DETECTING MOVING OBJECTS, GHOSTS, AND SHADOWS IN VIDEO STREAMS" IEEE TRANSACTIONS ON PATTERN ANALYSIS AND MACHINE INTELLIGENCE, IEEE INC. NEW YORK, US, vol. 25, no. 10, octobre 2003 (2003-10), pages 1337-1342, XP001185267 ISSN: 0162-8828
- HSI-JIAN LEE ET AL: "MULTI-FRAME SHIP DETECTION AND TRACKING IN AN INFRARED IMAGE SEQUENCE" PATTERN RECOGNITION, ELSEVIER, KIDLINGTON, GB, vol. 23, no. 7, janvier 1990 (1990-01), pages 785-798, XP000142363 ISSN: 0031-3203
- TISSAINAYAGAM P ET AL: "Visual tracking with automatic motion model switching" PATTERN RECOGNITION, ELSEVIER, KIDLINGTON, GB, vol. 34, no. 3, mars 2001 (2001-03), pages 641-660, XP004321292 ISSN: 0031-3203

## Description

### DOMAINE TECHNIQUE DE L'INVENTION

La présente invention a pour objet un procédé de détection anticipée d'une arrivée d'un véhicule automobile dans un secteur sombre. Elle a également pour objet tout véhicule automobile apte à mettre en oeuvre un tel procédé. L'invention a essentiellement pour but de proposer une solution pour permettre à un automobiliste d'arriver dans un secteur sombre avec des dispositifs projecteurs en marche, afin qu'il ne soit pas gêné, même un court instant, par une différence de luminosité existant entre un secteur clair d'où il arrive et un secteur sombre dans lequel il entre.

Le domaine de l'invention est, d'une façon générale, celui des projecteurs de véhicule automobile. Dans ce domaine, on connaît différents types de projecteurs, parmi lesquels on trouve essentiellement des feux de position, des feux de croisement, ou codes, des feux de route longue portée, des projecteurs perfectionnés, dits bimodes, qui cumulent les fonctions de feux de croisement et de feu de route en incorporant un cache amovible, des feux anti-brouillard, des feux de signalisation.... Pour l'ensemble de ces dispositifs projecteurs, traditionnellement, on utilise des sources lumineuses de type lampes halogènes, ou lampes à décharge ; par ailleurs, depuis quelques années, les diodes électroluminescentes ont considérablement évolué, ce qui permet de les utiliser également dans bon nombre de dispositifs projecteurs.

La présente invention sera plus particulièrement illustrée dans le cas où c'est l'allumage des feux de route qui est préconisé pour l'entrée dans un secteur sombre ; le principe de l'invention est cependant transposable sans difficulté pour provoquer l'allumage de tout autre dispositif projecteur de façon anticipée lors de l'entrée dans un secteur sombre.

### ARRIERE-PLAN TECHNOLOGIQUE DE L'INVENTION

Désormais, de multiples fonctionnalités sont associées aux différents types de dispositifs projecteurs. Parmi ces fonctionnalités, on trouve par exemple une capacité de mouvement de certains projecteurs, particulièrement utilisée, lorsque le véhicule automobile emprunte un virage, pour éclairer de façon optimale la trajectoire suivie par le véhicule dans le virage ; on trouve également une capacité de certains projecteurs bimodes à commuter automatiquement entre une utilisation des codes et une utilisation des feux de route, notamment pour éviter d'éblouir les conducteurs croisés. On trouve également une capacité de certains dispositifs projecteurs, le plus souvent des codes, à s'allumer automatiquement lorsque les conditions de luminosité extérieure nécessitent un allumage des feux, notamment lorsque le véhicule automobile est entré dans un tunnel.

Les solutions existantes pour cette dernière fonctionnalité sont essentiellement basées sur l'utilisation de photodiodes. Ces dernières permettent de détecter un niveau de luminosité extérieur ; or un tunnel, même éclairé par des sources de lumière artificielle, ne présente pas une luminosité comparable à celle de la lumière naturelle en plein jour. L'usage d'une photodiode unique permet donc de provoquer l'allumage de dispositifs projecteurs une fois que le véhicule est entré dans le tunnel.

Mais il est impossible, avec un tel équipement, d'anticiper l'allumage des feux pour que le véhicule arrive dans le tunnel avec ses dispositifs projecteurs déjà allumés. Une telle solution d'allumage automatique des feux, basée sur l'utilisation d'une unique photodiode, pose donc un certain nombre de problèmes. En effet, le fait de ne pas pouvoir anticiper l'allumage de dispositifs projecteurs lors de l'arrivée dans un tunnel a pour conséquence que le conducteur, à l'entrée du tunnel considéré, a une visibilité réduite jusqu'à l'allumage des dispositifs projecteurs, allumage qui, typiquement, prend une seconde, temps de réaction classique d'une photodiode. Or, un temps de parcours d'une seconde correspond, pour une vitesse moyenne de 90 kilomètres par heure, à une distance parcourue de 25 mètres, distance non négligeable dans des conditions de visibilité non optimales. Par ailleurs, lorsque les dispositifs projecteurs qui s'allument utilisent des sources lumineuses du type de celles au xénon, il faut ajouter au temps de réaction des photodiodes un temps de stabilisation du flux lumineux émis par le dispositif projecteur avant de disposer d'un éclairage satisfaisant.

Dans l'état de la technique, on a proposé une solution pour provoquer un allumage anticipé de dispositifs projecteurs, l'allumage se produisant avant que le véhicule n'entre dans le tunnel considéré. Une telle solution fait intervenir un ensemble de trois photodiodes : une première photodiode pointe vers le ciel ; une deuxième photodiode pointe vers l'avant du véhicule, donc dans certains cas vers le tunnel ; et une troisième photodiode pointe vers une région intermédiaire. L'apparition d'un tunnel en face du véhicule se traduit alors par des signaux caractéristiques générés par les trois photodiodes. Mais les signaux caractéristiques ainsi générés ne peuvent être interprétés comme l'arrivée prochaine dans un tunnel que si ces signaux coïncident avec un gabarit connu, qui a du être préalablement mémorisé ; or du fait de la grande variété existant dans les formes d'entrée de tunnel, il est alors indispensable de mémoriser énormément d'informations, afin de recenser autant de gabarits qu'il existe de formes différentes d'entrée dans les tunnels. Par ailleurs, la directivité des photodiodes ne permet pas, ou permet trop tard pour permettre un allumage anticipé de dispositifs projecteurs, de détecter un tunnel placé en sortie de virage. Enfin, équiper un véhicule avec un équipement spécifique à la détection anticipée de tunnels - deux photodiodes supplémentaires par rapport à un équipement habituel se limitant à une unique photodiode - représente un coût non négligeable.

On connait également dans l'état de la technique les documents JP60240545, EP1019267 et DE19704818.

### DESCRIPTION GENERALE DE L'INVENTION

L'objet de l'invention propose une solution aux problèmes et inconvénients qui viennent d'être exposés. D'une façon générale, l'invention propose d'utiliser une caméra, équipement de plus en plus souvent présent dans les véhicules automobiles notamment pour permettre des fonctionnalités de type "vision de nuit", pour détecter de façon anticipée une arrivée du véhicule dans un secteur sombre, par exemple un tunnel. A cet effet, dans l'invention, on prévoit notamment d'utiliser une application de traitement d'images pour déterminer, sur un ensemble d'images fournies par la caméra, si le véhicule s'apprête à pénétrer dans une zone sombre et pour provoquer, s'il s'avère que le véhicule va effectivement entrer dans un secteur sombre, un allumage des feux.

Une telle coopération entre des moyens de traitement d'images et un déclenchement de l'allumage de dispositifs projecteurs permet de s'affranchir de la présence d'une pluralité de photodiodes, tout en permettant le repérage d'un secteur sombre placé par exemple dans un virage. Des modes de mise en oeuvre particuliers du procédé selon l'invention permettent par ailleurs de s'affranchir de mémoriser une pluralités de gabarits correspondant aux différentes formes des entrées de tunnels, en prévoyant des critères de reconnaissance judicieux et fiables.

L'invention concerne donc essentiellement un procédé de détection anticipée d'une arrivée d'un véhicule automobile dans un secteur sombre, ledit procédé étant mis en oeuvre au sein du véhicule automobile comprenant notamment une caméra, des moyens de traitement informatique et un ensemble de dispositifs projecteurs, une traversée dudit secteur nécessitant un allumage d'au moins un des dispositifs projecteurs du véhicule automobile. Conformément à l'invention, le procédé comporte les différentes étapes consistant à :
- mettre en oeuvre une application de traitement d'images sur un ensemble d'images fournies par la caméra pour déterminer une arrivée prochaine du véhicule dans le secteur sombre ; ladite application comprenant les sous-étapes de :
   - identifier, sur une première image fournie par la caméra, au moins un objet sombre susceptible de correspondre au secteur sombre ;
   - analyser, sur des images suivantes fournies par la caméra, une évolution de chaque objet sombre identifié ; et
- le cas échéant, provoquer l'allumage d'au moins un des dispositifs projecteurs du véhicule automobile.

Le procédé selon l'invention peut comporter, en plus des caractéristiques principales qui viennent d'être mentionnées dans le paragraphe précédent, une ou plusieurs caractéristiques complémentaires parmi les suivantes:
- l'allumage du dispositif projecteur est réalisé au moins une seconde avant l'arrivée du véhicule automobile dans le secteur sombre ;
- l'opération d'identification d'au moins un objet sombre comporte une opération de seuillage effectuée à partir d'un histogramme de la première image ;
- le seuillage de l'histogramme réalisé sur la première image est un seuillage à hystérésis ;
- l'opération d'analyse des images suivantes comporte une opération d'analyse d'une évolution de l'aire de chaque objet sombre identifié ;
- seuls les objets sombres identifiés dont l'évolution de l'aire est croissante sont considérés comme susceptibles de correspondre au secteur sombre à détecter ;
- seuls les objets sombres identifiés dont l'évolution de l'aire est conforme à une loi d'évolution préalablement mémorisée dans les moyens de traitement informatiques du véhicule automobile sont considérés comme susceptibles de correspondre au secteur sombre à détecter ;
- seuls les objets sombres identifiés dont un point particulier observe une trajectoire dirigée vers le centre de l'image sont considérés comme susceptibles de correspondre au secteur sombre à détecter ;
- seuls les objets sombres identifiés dont l'aire a atteint une valeur minimale et pour lesquels le point particulier observe une trajectoire dirigée vers le centre de l'image sont considérés comme susceptibles de correspondre au secteur sombre à détecter ;
- seuls les objets sombres identifiés dont un point particulier observe une trajectoire dirigée vers le centre de l'image selon une vitesse corrélée à la vitesse du véhicule automobile sont considérés comme susceptibles de correspondre au secteur sombre à détecter ;
- pour chaque objet sombre identifié, le point particulier est le barycentre de l'objet sombre considéré.
- le procédé comporte l'étape supplémentaire consistant à utiliser un filtre prédictif pour pallier une disparition d'au moins un des objets sombres identifiés sur un nombre préalablement déterminé d'images suivantes fournies par la caméra ;
- le filtre prédictif est un filtre de Kalman ;
- la mise en oeuvre de l'application de traitement d'images est limitée à une bande centrale horizontale de l'ensemble d'images fournies par la caméra pour déterminer une arrivée prochaine du véhicule dans le secteur sombre ;
- les dispositifs projecteurs dont on provoque l'allumage comportent au moins une lampe à décharge ;
- les dispositifs projecteurs dont on provoque l'allumage sont des codes ;
- le secteur sombre est du type tunnel ;
- le procédé comporte les différentes étapes supplémentaires consistant à :
   - détecter une sortie du véhicule du secteur sombre ;
   - le cas échéant, provoquer l'extinction d'au moins un des dispositifs projecteurs du véhicule automobile ;
      - l'étape de détection de la sortie du véhicule hors de la zone sombre est réalisée en analysant une évolution d'un temps d'obturation de la caméra.

La présente invention se rapporte également à un véhicule automobile apte à mettre en oeuvre le procédé de détection anticipée d'une arrivée d'un véhicule automobile dans un secteur sombre, ledit procédé présentant les caractéristiques principales et éventuellement une ou plusieurs caractéristiques complémentaires qui viennent d'être mentionnées, ledit véhicule automobile comprenant notamment une caméra, des moyens de traitement informatique et un ensemble de dispositifs projecteurs, une traversée dudit secteur nécessitant un allumage d'au moins un des dispositifs projecteurs du véhicule automobile. Conformément à l'invention, le véhicule automobile comporte notamment :
- une application de traitement d'images appliquée sur un ensemble d'images fournies par la caméra pour déterminer une arrivée prochaine du véhicule dans le secteur sombre ;
- des moyens d'allumage automatiques d'au moins un des dispositifs projecteurs suite à la détermination de l'arrivée prochaine du véhicule automobile dans le secteur sombre.

L'invention et ses différentes applications seront mieux comprises à la lecture de la description qui suit et à l'examen des figures qui l'accompagnent.

### BREVE DESCRIPTION DES FIGURES

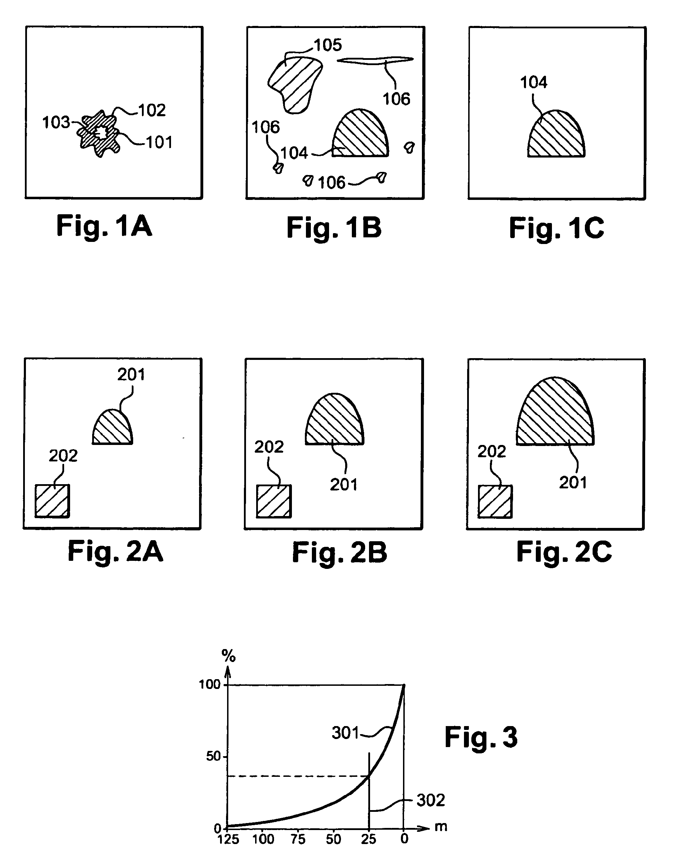

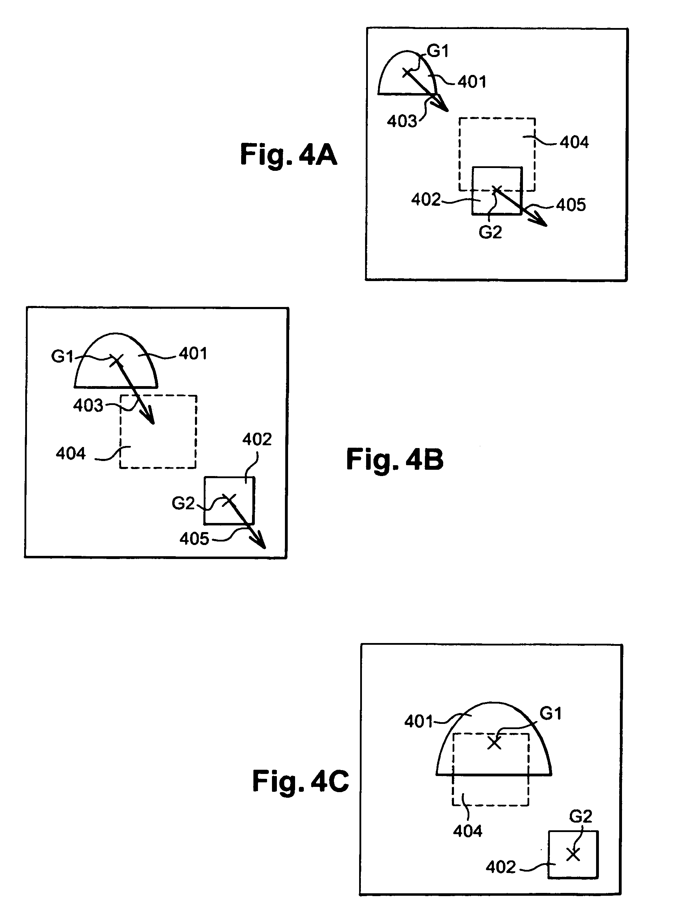

Celles-ci ne sont présentées qu'à titre indicatif et nullement limitatif de l'invention. Les figures montrent :
- aux figures 1-A à 1-C, une représentation schématique de segmentations par seuillage intervenant dans différents exemples de mise en oeuvre du procédé selon l'invention pour identifier des objets sombres susceptibles de correspondre à un secteur sombre à détecter;
- aux figures 2-A à 2-C, une représentations schématique du suivi d'un objet sombre détecté par une application de traitement d'images intervenant dans un exemple de mise en oeuvre du procédé selon l'invention ;
- à la figure 3, un exemple de loi de croissance d'un objet sombre utilisé dans un exemple de mise en oeuvre du procédé selon l'invention;
- aux figures 4-A à 4-C, une représentations schématique du suivi de deux objets sombres détectés par une application de traitement d'images intervenant dans un exemple de mise en oeuvre du procédé selon l'invention .

### DESCRIPTION DES FORMES DE REALISATION PREFEREES DE L'INVENTION

Les différents éléments apparaissant sur plusieurs figures auront gardé, sauf précision contraire, la même référence.

De plus en plus de véhicules sont désormais équipé de caméra, dont l'usage est aujourd'hui principalement l'aide à la conduite de nuit, en proposant à un conducteur, sur un écran de contrôle et en temps réel, une image claire d'une route qu'il emprunte de nuit, notamment grâce à l'utilisation de signaux infra-rouge. Aussi, une idée essentielle de l'invention est-elle de tirer parti de la présence de caméra à bord de certains véhicule pour détecter, de façon anticipée, l'arrivée du véhicule automobile dans un secteur sombre. Une telle détection anticipée permet alors de provoquer l'allumage de dispositifs projecteurs avant que le véhicule n'entre dans le secteur sombre considéré. A cet effet, une application de traitement d'images est utilisée.

Dans les exemples qui vont être décrits, on peut distinguer essentiellement deux phases dans le processus de détermination de l'entrée prochaine du véhicule dans un secteur sombre. Une première phase consiste en la sélection, sur l'image, d'objets sombres, qui deviennent des objets candidats susceptibles de constituer un secteur sombre à détecter. Une deuxième phase consiste alors à suivre dans le temps les objets sombres sélectionnés, en appliquant un ou plusieurs critères discriminants, pour finalement ne conserver qu'un objet sombre correspondant au secteur sombre dans lequel le véhicule s'apprête à pénétrer, pour peu que ce secteur sombre existe.

Les figures 1-A, 1-B et 1-C illustrent différents exemples de mise en oeuvre de la première phase du procédé selon l'invention ; elles montrent schématiquement, respectivement, les résultats obtenus par différentes opérations de segmentation effectuées sur une image fournie par la caméra embarquée dans le véhicule. La segmentation est ici une opération consistant à extraire uniquement des zones sombres de l'image ; à cet effet, on propose notamment d'utiliser un histogramme en niveau de gris de l'image, et d'y réaliser un seuillage ; l'histogramme en niveau de gris correspond à une représentation de la répartition de l'intensité lumineuse de l'image dans laquelle on porte en abscisse les valeurs des niveaux de gris et en ordonnée, pour chaque niveau de gris, le nombre de points de l'image ayant l'intensité correspondant à ce niveau. Un tel histogramme peut, dans la plupart des cas, être approximé par une somme de Gaussiennes.

Ainsi, la figure 1-A montre un exemple dans lequel on a utilisé un seuil fort pour procéder à la segmentation d'une première image fournie par la caméra. Par utilisation d'un seuil fort, on désigne le fait qu'on a retenu une faible quantité des pixels de l'image à segmenter, ces pixels correspondant aux pixels les plus sombres. On obtient ainsi un premier objet sombre 101, hachuré sur la figure 1-A. L'utilisation d'un seuil fort permet d'obtenir des objets sombres bien localisés, bien identifiables séparément, mais peu fermés, comme en témoigne la présence d'un contour 102 irrégulier et la présence de pixels non retenus 103 à l'intérieur même de la forme globale du premier objet sombre 101.

La figure 1-B montre un exemple dans lequel on a utilisé un seuil faible pour procéder à la segmentation d'une première image fournie par la caméra. Par utilisation d'un seuil faible, on désigne le fait qu'on a retenu une quantité relativement importante des pixels de l'image à segmenter, ces pixels correspondant toujours aux pixels les plus sombres. On obtient ainsi un deuxième objet sombre 104 et un troisième objet sombre 105 hachurés sur la figure 1-B. L'utilisation d'un seuil faible permet d'obtenir des objets sombres bien fermés, mais entachés de bruit, symbolisés ici notamment par le troisième objet sombre 105 et par d'autres pixels épars 106 retenus.

La figure 1-C montre un exemple dans lequel on a utilisé un seuillage à hystérésis. Ce dernier seuillage permet d'obtenir des résultats optimaux en terme de sélection précise d'objets sombres, en éliminant le bruit correspondant aux pixels sombres isolés dans l'image, tout en assurant la fermeture des objets sombres sélectionnés, fermeture qui facilite par la suite le suivi de l'évolution desdits objets sombres. Le seuillage à hystérésis consiste à conserver la bonne identification et localisation d'objets sombres obtenus au moyen d'un seuil fort, comme illustré à la figure 1-A, tout en profitant de la bonne fermeture de ces objets sombres obtenus au moyen d'un seuil plus faible, comme illustré à la figure 1-B. A cet effet, on procède à une dilatation conditionnelle des objets sombres de l'image binaire issue du traitement au moyen du seuil fort, dilatation conditionnelle réalisée par rapport aux délimitations des objets sombres correspondant de l'image binaire issue du traitement au moyen du seuil faible. Ainsi, la taille des objets sombres issues du seuillage fort est accrue sans excéder leur taille dans l'image issue du seuillage faible.

Dans l'exemple représenté à la figure 1-C, on part du premier objet sombre 101 de la figure 1-A, auquel on fait subir une dilatation conditionnelle relativement au deuxième objet sombre 104 de la figure 1-B. On obtient finalement, à l'issue de cette opération de segmentation utilisant une méthode de seuillage à hystérésis, un unique objet sombre correspondant au deuxième objet sombre 104. Ainsi, d'une façon générale, on obtient par cette méthode des objets sombres bien fermés, dont l'évolution dans le temps sera facile à suivre, tout en étant débarrassé du bruit généré par l'utilisation d'un seuil trop faible.

Une fois la phase de sélection, sur une première image, d'objets sombres, on propose, dans différents exemples de mise en oeuvre du procédé selon l'invention, d'appliquer un ou plusieurs critères discriminants pour, au fil du temps, éliminer certains - parfois tous les- objets sombres sélectionnés pour ne conserver, dans le cas où il existe, que l'objet sombre correspondant au secteur sombre dans lequel le véhicule s'apprête à entrer, et provoquer en conséquence l'allumage de dispositifs projecteurs. On procède alors à un suivi dans le temps de l'évolution de chaque objet sombre sélectionné, sur les images qui suivent la première image à partir de laquelle ont été extraits les objets sombres à suivre. Bien entendu, dans le procédé selon l'invention, au cours du suivi des différents objets sombres, de nouvelles zones sombres peuvent apparaître sur des images suivantes, ces nouvelles zones sombres pouvant alors être effectivement sélectionnées comme objets sombre et faire à leur tour l'objet d'un suivi d'évolution.

Un premier critère discriminant qu'on propose d'utiliser dans le procédé selon l'invention est un critère qui est directement lié à l'évolution de l'aire de chaque objet sombre sélectionné. Les figures 2-A à 2-C permettent d'illustrer ce critère de sélection. Sur ces figures, un premier objet sombre 201 et un second objet sombre 202 ont été sélectionnés dans une première phase ; les figures 2-A, 2-B et 2-C montrent l'évolution de la taille des objets sombres 201 et 202 au cours du temps. D'une façon générale, une mise en correspondance d'un même objet sombre d'une image à l'autre peut être réalisée par exemple en utilisant une méthode de calcul consistant à minimiser une distance Euclidienne.

Comme on peut le constater, le premier objet sombre 201, qui manifestement correspond à un tunnel dans lequel le véhicule automobile s'apprête à entrer, est caractérisé par une aire qui croit au cours du temps. Par contre, le second objet sombre 202, qui manifestement correspond à un autre véhicule roulant devant à gauche du véhicule comportant la caméra, et à une vitesse comparable à ce dernier, est caractérisé par une aire qui est relativement stable au cours du temps. Dans le procédé selon l'invention, on ne conservera que le premier objet sombre 201 comme objet susceptible de correspondre à un secteur sombre dans lequel le véhicule peut entrer et nécessitant un allumage anticipé de dispositifs projecteurs.

Le véhicule automobile considéré comporte des moyens de traitement informatiques, incluant de préférence au moins un module de mémoire. Avantageusement, dans l'invention, on propose de mémoriser une ou plusieurs lois de croissance, par exemple du type de celle représentée schématiquement à la figure 3. Sur cette figure, on a représenté une courbe 301 correspondant à un modèle mathématique de la croissance de l'aire - telle que perçue par la caméra - d'un secteur sombre dans lequel un véhicule s'apprête à entrer, en fonction de la distance séparant ledit véhicule de l'entrée dans le secteur sombre considéré. L'axe des ordonnées correspond donc au pourcentage de l'aire occupée par le secteur sombre considéré par rapport à la totalité de la superficie de l'image. L'axe des abscisses correspond pour sa part à la mesure de la distance, en mètres, séparant le véhicule de la zone sombre.

Lorsque l'évolution de l'aire d'un objet sombre sélectionné suit - au moins approximativement - une loi du type de celle montrée à la figure 3, proche d'une fonction exponentielle, on décide, dans le procédé selon l'invention, de provoquer l'allumage de dispositifs projecteurs. Cet allumage peut par exemple être provoqué à une distance de 25 mètres, repérée sur la figure 3 par un trait vertical 302, distance qui, pour une vitesse du véhicule de 90 kilomètres par heure, permet de bénéficier de l'allumage des feux une seconde avant l'entrée dans le secteur sombre. A une telle distance, l'aire occupée par la représentation du secteur sombre correspond approximativement au tiers de l'aire totale de l'image. Dans un exemple particulier de l'invention, on prévoit à titre d'exemple, de tenir compte de la vitesse du véhicule pour déterminer à quelle distance du secteur sombre il faut déclencher l'allumage des dispositifs projecteurs, un déclenchement anticipé d'une seconde étant satisfaisant dans tous les cas.

Un deuxième critère discriminant qu'on propose d'utiliser dans le procédé selon l'invention est un critère qui est directement lié à la direction de déplacement de chaque objet sombre sélectionné. Les figures 4-A à 4-C permettent d'illustrer ce critère de sélection. Sur ces figures, un premier objet sombre 401 et un second objet sombre 402 ont été sélectionnés dans une première phase ; les figures 4-A, 4-B et 4-C montrent l'évolution des objets sombres 401 et 402 au cours du temps, en s'intéressant plus particulièrement à leur trajectoire. Comme on peut le constater, le premier objet sombre 401, qui manifestement correspond à un tunnel dans lequel le véhicule automobile s'apprête à entrer, est caractérisé par le fait qu'il se dirige progressivement vers une partie centrale 404 de l'image.

Une telle observation peut être réalisée en repérant l'évolution d'un point quelconque du premier objet sombre, par exemple son barycentre G1, et en repérant son déplacement entre deux images consécutives au moyen d'une première flèche 403. Par contre, le second objet sombre 402, qui manifestement correspond à un autre véhicule roulant devant, à droite du véhicule comportant la caméra, est caractérisé par le fait qu'il s'éloigne progressivement de la partie centrale 404 de l'image, comme illustré au moyen d'une seconde flèche 405 précisant le sens et la direction du déplacement du centre de gravité G2 du second objet sombre 402. Dans le procédé selon l'invention, on ne conservera que le premier objet sombre 401 comme susceptible de correspondre à un secteur sombre dans lequel le véhicule peut entrer et nécessitant un allumage anticipé de dispositifs projecteurs.

Dans un exemple particulier de l'invention, on propose de corréler la vitesse du véhicule équipé de la caméra avec une vitesse de déplacement d'un objet sombre donné vers la partie centrale de l'image pour déterminer si l'objet sombre considéré est effectivement susceptible de correspondre à un secteur sombre dans lequel le véhicule va entrer.

L'opération d'analyse de l'évolution de la trajectoire des différents objets sombres préalablement sélectionnés peut, afin de limiter les calculs de l'application de traitement d'images utilisée, n'intervenir que pour des objets sombres ayant atteint une certaine aire dans l'image segmentée.

Dans un exemple particulier de mise en oeuvre du procédé selon l'invention, on propose d'utiliser un filtre prédicteur. Un tel usage peut s'avérer intéressant dans des circonstances particulières qui ont pour conséquence la disparition, pendant quelques images, d'un objet sombre dont on effectuait le suivi. Une telle circonstance particulière peut par exemple correspondre au cas où le véhicule équipé de la caméra est doublé par un second véhicule, un secteur sombre distant étant alors occulté temporairement pendant la phase de rabattement du second véhicule. Un objet sombre ainsi perdu peut être reconnu, et récupéré, sur les images suivantes en utilisant un filtre prédicteur ; un tel filtre a pour rôle de donner, à partir des évolutions passées, l'évolution attendue de l'objet sombre temporairement caché. Ainsi, lorsque ce dernier réapparaît, une comparaison entre sa position de nouveau visible et la position à laquelle il était attendu permet de le reconnaître comme l'objet sombre ayant précédemment disparu, et de poursuivre les calculs nécessaires. Par exemple, le filtre prédicteur peut être du type filtre de Kalman, qui est un filtre prédicteur-correcteur connu dans l'état de la technique. Un tel filtre prédicteur peut par ailleurs être utilisé pour supprimer les objets sombres sélectionnés qui ne correspondent en fait qu'à du bruit sur l'image segmentée, de tels objets n'ayant pas de correspondant temporel.

Dans un exemple particulier, on limite les calculs de l'application de traitement d'images, tant pour la phase de sélection d'objets sombres que pour la phase de suivi de l'évolution de ces objets sombres, à une bande centrée horizontalement des images à analyser. Typiquement, la bande centrale peut couvrir la moitié de l'image à analyser.

Dans un exemple particulier de l'invention, on prévoit de provoquer une extinction automatique des dispositifs projecteurs, qui auraient été allumés de façon anticipée suite à la mise en oeuvre de l'invention, une fois que le véhicule est sorti du secteur sombre considéré. A cet effet, on propose par exemple d'utiliser comme paramètre de décision le temps d'obturation de la caméra lorsque celle-ci est de type CCD. En effet, le temps d'obturation est régulé automatiquement par la caméra, et est fonction de l'éclairage ambiant. Il peut donc être directement utilisé pour détecter que le véhicule est sorti du secteur sombre. L'information fournie par le temps d'obturation de la caméra peut par ailleurs également être utilisé lors de l'entrée du véhicule dans un secteur sombre pour confirmer une telle entrée ; si, pour une raison quelconque, les dispositifs projecteurs n'ont pas été allumés de façon anticipée avant l'entrée dans le secteur sombre, l'information fournie par le temps d'obturation de la caméra permet alors de remédier à cette situation en déclenchant l'allumage de dispositifs projecteurs.

## Revendications

1. Procédé de détection anticipée d'une arrivée d'un véhicule automobile dans un secteur sombre (201 ;401), ledit procédé étant mis en oeuvre au sein du véhicule automobile comprenant notamment une caméra, des moyens de traitement informatique et un ensemble de dispositifs projecteurs, une traversée dudit secteur nécessitant un allumage d'au moins un des dispositifs projecteurs du véhicule automobile, **caractérisé en ce qu'**il comporte les différentes étapes consistant à :
- mettre en oeuvre une application de traitement d'images sur un ensemble d'images fournies par la caméra pour déterminer une arrivée prochaine du véhicule dans le secteur sombre (201 ;401) ; ladite application comprenant les sous-étapes de :
- identifier, sur une première image fournie par la caméra, au moins un objet sombre susceptible de correspondre au secteur sombre (201 ;401);
- analyser, sur des images suivantes fournies par la caméra, une évolution de chaque objet sombre identifié ; et
- le cas échéant, provoquer l'allumage d'au moins un des dispositifs projecteurs du véhicule automobile,
et **caractérisé en ce que** seuls les objets sombres identifiés dont un point particulier observe une trajectoire (403) dirigée vers le centre (404) de l'image sont considérés comme susceptibles de correspondre au secteur sombre (201 ;401) à détecter.

2. Procédé selon la revendication précédente **caractérisé en ce que** l'allumage du dispositif projecteur est réalisé au moins une seconde avant l'arrivée du véhicule automobile dans le secteur sombre (201 ;401).

3. Procédé selon l'une au moins des revendications 1 ou 2 **caractérisé en ce que** l'opération d'identification d'au moins un objet sombre comporte une opération de seuillage effectuée à partir d'un histogramme de la première image.

4. Procédé selon la revendication 3 **caractérisé en ce que** le seuillage de l'histogramme réalisé sur la première image est un seuillage à hystérésis.

5. Procédé selon l'une au moins des revendications 1 à 4 **caractérisé en ce que** l'opération d'analyse des images suivantes comporte une opération d'analyse d'une évolution de l'aire de chaque objet sombre identifié.

6. Procédé selon la revendication précédente **caractérisé en ce que** seuls les objets sombres identifiés dont l'évolution de l'aire est croissante sont considérés comme susceptibles de correspondre au secteur sombre (201 ;401) à détecter.

7. Procédé selon l'une au moins des revendications 5 ou 6, **caractérisé en ce que** seuls les objets sombres identifiés dont l'évolution de l'aire est conforme à une loi d'évolution (301) préalablement mémorisée dans les moyens de traitement informatiques du véhicule automobile sont considérés comme susceptibles de correspondre au secteur sombre (201 ;401) à détecter.

8. Procédé selon l'une des revendications précédentes, **caractérisé en ce que** seuls les objets sombres identifiés dont l'aire a atteint une valeur minimale et pour lesquels le point particulier observe une trajectoire (403) dirigée vers le centre (404) de l'image sont considérés comme susceptibles de correspondre au secteur sombre (201 ;401) à détecter.

9. Procédé selon l'une des revendications précédentes, **caractérisé en ce que** seuls les objets sombres identifiés dont un point particulier observe une trajectoire(403) dirigée vers le centre (404) de l'image selon une vitesse corrélée à la vitesse du véhicule automobile sont considérés comme susceptibles de correspondre au secteur sombre (201 ;401) à détecter.

10. Procédé selon l'une des revendications précédentes , **caractérisé en ce que**, pour chaque objet sombre identifié, le point particulier est le barycentre (G1) de l'objet sombre considéré.

11. Procédé selon l'une des revendications précédentes, **caractérisé en ce qu'**il comporte l'étape supplémentaire consistant à utiliser un filtre prédictif pour pallier une disparition d'au moins un des objets sombres identifiés sur un nombre préalablement déterminé d'images suivantes fournies par la caméra.

12. Procédé selon la revendication précédente, **caractérisé en ce que** le filtre prédictif est un filtre de Kalman.

13. Procédé selon l'une au moins des revendications précédentes **caractérisé en ce que** la mise en oeuvre de l'application de traitement d'images est limitée à une bande centrale horizontale de l'ensemble d'images fournies par la caméra pour déterminer une arrivée prochaine du véhicule dans le secteur sombre.

14. Procédé selon l'une au moins des revendications précédentes **caractérisé en ce que** les dispositifs projecteurs dont on provoque l'allumage comportent au moins une lampe à décharge.

15. Procédé selon l'une au moins des revendications précédentes **caractérisé en ce que** les dispositifs projecteurs dont on provoque l'allumage sont des codes.

16. Procédé selon l'une au moins des revendications précédentes **caractérisé en ce que** le secteur sombre (201 ;401) est du type tunnel.

17. Procédé selon l'une au moins des revendications précédentes **caractérisé en ce qu'**il comporte les différentes étapes supplémentaires consistant à :
- détecter une sortie du véhicule du secteur sombre (201 ;401) ;
- le cas échéant, provoquer l'extinction d'au moins un des dispositifs projecteurs du véhicule automobile.

18. Procédé selon la revendication précédente **caractérisé en ce que** l'étape de détection de la sortie du véhicule hors de la zone sombre est réalisée en analysant une évolution d'un temps d'obturation de la caméra.

19. Véhicule automobile apte à mettre en oeuvre un procédé de détection anticipée d'une arrivée d'un véhicule automobile dans un secteur sombre (201 ;401), ledit véhicule automobile comprenant notamment une caméra, des moyens de traitement informatique et un ensemble de dispositifs projecteurs, une traversée dudit secteur nécessitant un allumage d'au moins un des dispositifs projecteurs du véhicule automobile, **caractérisé en ce qu'**il comporte notamment :
- une application de traitement d'images appliquée sur un ensemble d'images fournies par la caméra pour déterminer une arrivée prochaine du véhicule dans le secteur sombre (201 ;401) ; ladite application comprenant les sous-étapes de :
- identifier, sur une première image fournie par la caméra, au moins un objet sombre susceptible de correspondre au secteur sombre (201 ;401);
- analyser, sur des images suivantes fournies par la caméra, une évolution de chaque objet sombre identifié ; seuls les objets sombres identifiés dont un point particulier observe une trajectoire (403) dirigée vers le centre (404) de l'image étant considérés comme susceptibles de correspondre au secteur sombre (201 ;401) à détecter,
- des moyens d'allumage automatiques d'au moins un des dispositifs projecteurs suite à la détermination de l'arrivée prochaine du véhicule automobile dans le secteur sombre (201 ;401).

## Claims

1. Method for advance detection of arrival of a motor vehicle in a dark sector (201; 401), the said method which is implemented within the motor vehicle comprising in particular a camera, data processing means and a series of headlight devices, with passage through the said sector requiring switching on of at least one of the headlight devices of the motor vehicle, **characterised in that** it comprises the different steps consisting of:
- implementing application of image processing on a series of images supplied by the camera, in order to determine imminent arrival of the vehicle in the dark sector (201; 401); the said application comprising the sub-steps of:
- identifying on a first image supplied by the camera at least one dark object which can correspond to the dark sector (201; 401);
- analysing on the following images supplied by the camera a development of each dark object identified: and
- if applicable, giving rise to switching on of at least one of the headlight devices of the motor vehicle,
and **characterised in that** only the dark objects identified, a particular point of which complies with a trajectory (403) which faces towards the centre (404) of the image, are considered to be liable to correspond to the dark sector (201; 401) to be detected.

2. Method according to the preceding claim, **characterised in that** the headlight device is switched on at least one second before the motor vehicle reaches the dark sector (201; 401).

3. Method according to at least one of claims 1 or 2, **characterised in that** the operation of identification of at least one dark object comprises a thresholding operation which is carried out on the basis of a histogram of the first image.

4. Method according to claim 3, **characterised in that** the thresholding of the histogram carried out on the first image is hysteresis thresholding.

5. Method according to any one of claims 1 to 4, **characterised in that** the operation of analysis of the following images comprises an operation of analysis of development of the area of each dark object identified.

6. Method according to the preceding claim, **characterised in that** only the dark objects identified, the development of the area of which is increasing, are considered to be liable to correspond to the dark sector (201; 401) to be detected.

7. Method according to at least one of claims 5 or 6, **characterised in that** only the dark objects identified, the development of the area of which is in conformity with a law of development (301) previously stored in the data processing means of the motor vehicle, are considered to be liable to correspond to the dark sector (201; 401) to be detected.

8. Method according to one of the preceding claims, **characterised in that** only the dark objects identified, the development of the area of which has reached a minimum value, and for which the particular point complies with a trajectory (403) which faces towards the centre (404) of the image, are considered to be liable to correspond to the dark sector (201; 401) to be detected.

9. Method according to one of the preceding claims, **characterised in that** only the dark objects identified, a particular point of which complies with a trajectory (403) which faces towards the centre (404) of the image according to a speed which is correlated to the speed of the motor vehicle, are considered to be liable to correspond to the dark sector (201; 401) to be detected.

10. Method according to one of the preceding claims, **characterised in that,** for each dark object identified, the particular point is the barycentre (G1) of the dark object considered.

11. Method according to one of the preceding claims, **characterised in that** it comprises the additional step consisting of using a predictive filter in order to mitigate the disappearance of at least one of the dark objects identified on a previously determined number of successive images supplied by the camera.

12. Method according to the preceding claim, **characterised in that** the predictive filter is a Kalman filter.

13. Method according to at least one of the preceding claims, **characterised in that** the implementation of the application of processing of images is limited to a horizontal central band of the series of images supplied by the camera in order to determine imminent arrival of the vehicle in the dark sector.

14. Method according to at least one of the preceding claims, **characterised in that** the headlight devices which are made to switch on comprise at least one discharge lamp.

15. Method according to at least one of the preceding claims, **characterised in that** the headlight devices which are made to switch on are dipped headlights.

16. Method according to at least one of the preceding claims, **characterised in that** the dark sector (201; 401) is of the tunnel type.

17. Method according to at least one of the preceding claims, **characterised in that** it comprises the different additional steps consisting of:
- detecting exiting of the vehicle from the dark sector (201; 401);
- if applicable, giving rise to switching off of at least one of the headlight devices of the motor vehicle.

18. Method according to the preceding claim, **characterised in that** the step of detection of exiting of the vehicle from the dark area is carried out by analysing a development of a time of shutting of the camera.

19. Motor vehicle which can implement a method for advance detection of arrival of a motor vehicle in a dark sector (201; 401), the said motor vehicle comprising in particular a camera, data processing means and a series of headlight devices, with passage through the said sector requiring switching on of at least one of the headlight devices of the motor vehicle, **characterised in that** it comprises in particular:
- an application of processing of images applied to a series of images supplied by the camera in order to determine imminent arrival of the vehicle in the dark sector (201; 401); the said application comprising the sub-steps of:
- identifying on a first image supplied by the camera at least one dark object which can correspond to the dark sector (201; 401);
- analysing on the following images supplied by the camera a development of each dark object identified; only the dark objects identified, a particular point of which complies with a trajectory (403) which faces towards the centre (404) of the image, being considered to be liable to correspond to the dark sector (201; 401) to be detected;
- means for automatic switching on of at least one of the headlight devices further to determination of the imminent arrival of the motor vehicle in the dark sector (201; 401).

## Patentansprüche

1. Verfahren zum antizipierten Erkennen der Ankunft eines Kraftfahrzeugs in einem dunklen Bereich (201; 401), wobei das Verfahren innerhalb des Kraftfahrzeugs durchgeführt wird, das insbesondere eine Kamera, Mittel zur Datenverarbeitung und einen Satz Scheinwerfervorrichtungen umfasst, wobei ein Durchfahren dieses Bereichs ein Einschalten wenigstens einer der Scheinwerfervorrichtungen des Kraftfahrzeugs erfordert,
**dadurch gekennzeichnet, dass** es verschiedene Schritte umfasst, die darin bestehen:
- an einer von der Kamera gelieferten Bilderreihe eine Bildverarbeitungsfunktion durchzuführen, um ein bevorstehendes Erreichen des dunklen Bereichs (210; 401) durch das Fahrzeug zu bestimmen; wobei die Funktion folgende Unterschritte umfasst:
- Identifizieren wenigstens eines dunklen Objekts, das dem dunklen Bereich (210; 401) zu entsprechen vermag, auf einem ersten von der Kamera gelieferten Bild;
- Feststellen einer Veränderung eines jeden identifizierten dunklen Objekts auf den nachfolgenden von der Kamera gelieferten Bildern; und
- gegebenenfalls das Einschalten wenigstens einer der Scheinwerfervorrichtungen des Kraftfahrzeugs zu veranlassen,
und **dadurch gekennzeichnet, dass** nur die identifizierten dunklen Objekte, bei denen ein spezieller Punkt eine zur Mitte (404) des Bildes gerichtete Bahn (403) verfolgt, als solche betrachtet werden, die geeignet sind, dem zu erkennenden dunklen Bereich (201; 401) zu entsprechen.

2. Verfahren nach dem vorhergehenden Anspruch,
**dadurch gekennzeichnet, dass** das Einschalten der Scheinwerfervorrichtung wenigstens eine Sekunde vor der Ankunft des Kraftfahrzeugs in dem dunklen Bereich (201; 401).

3. Verfahren nach wenigstens einem der Ansprüche 1 oder 2,
**dadurch gekennzeichnet, dass** der Schritt zur Identifizierung wenigstens eines dunklen Objekts einen Schwellenwertvergleich umfasst, der anhand eines Histogramms des ersten Bildes erfolgt.

4. Verfahren nach Anspruch 3,
**dadurch gekennzeichnet, dass** der Schwellenwertvergleich des Histogramms des ersten Bilds ein Hysterese-Schwellenwertvergleich ist.

5. Verfahren nach wenigstens einem der Ansprüche 1 bis 4,
**dadurch gekennzeichnet, dass** die Analyse der nachfolgenden Bilder einen Schritt zur Feststellung einer Veränderung der Fläche eines jeden identifizierten dunklen Objekts umfasst.

6. Verfahren nach dem vorhergehenden Anspruch,
**dadurch gekennzeichnet, dass** nur die identifizierten dunklen Objekte mit einer Flächenvergrößerung als solche betrachtet werden, die geeignet sind, dem zu erkennenden dunklen Bereich (201; 401) zu entsprechen.

7. Verfahren nach wenigstens einem der Ansprüche 5 oder 6,
**dadurch gekennzeichnet, dass** nur die identifizierten dunklen Objekte, deren Flächenveränderung einer zuvor in den Bildverarbeitungsmitteln des Kraftfahrzeugs gespeicherten Veränderungsgesetzmäßigkeit (301) entspricht, als solche betrachtet werden, die geeignet sind, dem zu erkennenden dunklen Bereich zu entsprechen.

8. Verfahren nach einem der vorhergehenden Ansprüche,
**dadurch gekennzeichnet, dass** nur die identifizierten dunklen Objekte, deren Fläche einen Mindestwert erreicht hat und bei denen der spezielle Punkt eine zur Mitte (404) des Bildes gerichtete Bahn (403) verfolgt, als solche betrachtet werden, die geeignet sind, dem zu erkennenden dunklen Bereich (201; 401) zu entsprechen.

9. Verfahren nach einem der vorhergehenden Ansprüche,
**dadurch gekennzeichnet, dass** nur die identifizierten dunklen Objekte, bei denen ein spezieller Punkt mit einer zur Geschwindigkeit des Kraftfahrzeugs in Korrelation stehenden Geschwindigkeit eine zur Mitte (404) des Bildes gerichtete Bahn (403) verfolgt, als solche betrachtet werden, die geeignet sind, dem zu erkennenden dunklen Bereich (201; 401) zu entsprechen.

10. Verfahren nach einem der vorhergehenden Ansprüche,
**dadurch gekennzeichnet, dass** für jedes identifizierte dunkle Objekt der spezielle Punkt der Schwerpunkt (G1) des betrachteten dunklen Objekts ist.

11. Verfahren nach einem der vorhergehenden Ansprüche,
**dadurch gekennzeichnet, dass** es den zusätzlichen Schritt umfasst, der darin besteht, einen Prädiktionsfilter zu verwenden, um das Verschwinden wenigstens eines dunklen Objekts abzumildern, das auf einer zuvor bestimmten Anzahl nachfolgender, von der Kamera gelieferter Bilder identifiziert wurde.

12. Verfahren nach dem vorhergehenden Anspruch,
**dadurch gekennzeichnet, dass** der Prädiktionsfilter ein Kalman-Filter ist.

13. Verfahren nach wenigstens einem der vorhergehenden Ansprüche,
**dadurch gekennzeichnet, dass** die Durchführung der Bilderverarbeitungsfunktion auf einen waagerechten mittleren Streifen der von der Kamera gelieferten Bilderreihe beschränkt ist, um eine bevorstehende Ankunft des Kraftfahrzeugs in dem dunklen Bereich zu bestimmen.

14. Verfahren nach wenigstens einem der vorhergehenden Ansprüche,
**dadurch gekennzeichnet, dass** die Scheinwerfervorrichtungen, deren Einschalten veranlasst wird, wenigstens eine Entladungslampe aufweisen.

15. Verfahren nach wenigstens einem der vorhergehenden Ansprüche,
**dadurch gekennzeichnet, dass** die Scheinwerfervorrichtungen, deren Einschalten veranlasst wird, Abblendlichtscheinwerfer sind.

16. Verfahren nach wenigstens einem der vorhergehenden Ansprüche,
**dadurch gekennzeichnet, dass** der dunkle Bereich (201; 401) vom Typ Tunnel ist.

17. Verfahren nach wenigstens einem der vorhergehenden Ansprüche,
**dadurch gekennzeichnet, dass** es verschiedene zusätzliche Schritte umfasst, die darin bestehen:
- ein Austreten des Fahrzeugs aus dem dunklen Bereich (201; 401) zu erkennen;
- gegebenenfalls das Ausschalten von wenigstens einer der Scheinwerfervorrichtungen des Kraftfahrzeugs zu veranlassen.

18. Verfahren nach dem vorhergehenden Anspruch,
**dadurch gekennzeichnet, dass** das Austreten des Fahrzeugs aus dem dunklen Bereich dadurch erkannt wird, dass bei der Belichtungszeit der Kamera eine Veränderung festgestellt wird.

19. Kraftfahrzeug, das ein Verfahren zum antizipierten Erkennen der Ankunft eines Kraftfahrzeugs in einem dunklen Bereich (201; 401) durchzuführen vermag, wobei das Kraftfahrzeug insbesondere eine Kamera, Mittel zur Datenverarbeitung und einen Satz Scheinwerfervorrichtungen umfasst, wobei ein Durchfahren dieses Bereichs ein Einschalten wenigstens einer der Scheinwerfervorrichtungen des Kraftfahrzeugs erfordert,
**dadurch gekennzeichnet, dass** es insbesondere umfasst:
- eine Bildverarbeitungsfunktion, die auf eine von der Kamera gelieferte Bilderreihe angewandt wird, um ein bevorstehendes Erreichen des dunklen Bereichs (210; 401) durch das Fahrzeug zu bestimmen; wobei die Funktion folgende Unterschritte umfasst:
- Identifizieren wenigstens eines dunklen Objekts, das geeignet ist, dem dunklen Bereich (210; 401) zu entsprechen, auf einem ersten von der Kamera gelieferten Bild;
- Feststellen einer Veränderung eines jeden identifizierten dunklen Objekts auf den nachfolgenden von der Kamera gelieferten Bildern; wobei nur die identifizierten dunklen Objekte, bei denen ein spezieller Punkt eine zur Mitte (404) des Bildes gerichtete Bahn (403) verfolgt, als solche betrachtet werden, die geeignet sind, dem zu erkennenden dunklen Bereich (201; 401) zu entsprechen,
- Mittel zum automatischen Einschalten wenigstens einer der Scheinwerfervorrichtungen infolge der Feststellung der bevorstehenden Ankunft des Kraftfahrzeugs in dem dunklen Bereich (201; 401).
